# EUROPEAN PATENT SPECIFICATION

(11) **EP 1 610 252 B1**
(45) Date of publication and mention of the grant of the patent: **18.04.2007**
(21) Application number: 03714970.5
(22) Date of filing: 10.03.2003
(51) Int. Cl.: G06F 19/00, H04L 12/28, G08G 1/0962, B60R 16/02

(54) **INTERACTIVE METHOD AND SYSTEM FOR CONTROLLING A VEHICLE**
INTERAKTIVES VERFAHREN UND SYSTEM ZUR FAHRZEUGSTEUERUNG
PROCEDE ET SYSTEME INTERACTIF DE COMMANDE D'UN VEHICULE

(43) Date of publication of application: 28.12.2005
(73) Proprietor: Eneo Laboratories, S.A., 08950 Esplugues de Llobregat Barcelona (ES)
(72) Inventor: ZAMORA LOPEZ, Javier, c/o Edificio Imagina, 08950 Barcelona (ES); LECUMBERRI IRIARTE, David, Edificio Imagina,, 08950 Barcelona (ES)
(74) Representative: Gallego Jiménez, José Fernando
(86) International application number: PCT/ES2003/000102
(87) International publication number: WO 2004/081840

(56) References cited:
- EP-A2- 1 034 984
- US-A- 6 028 537
- US-A- 6 148 253
- US-A1- 2001 025 376
- US-B1- 6 487 717

## Description

The present invention relates to a method and interactive system for vehicle control, which comprises a control unit connected to at least one vehicle device by means of first connection means, at least one client device connected to the control unit through second connection means, whereon a user interacts, whose control unit comprises a transfer protocol server which transfers at least one human-machine interface to the client device, and a system logging means.

### Background of the invention

The progressive and massive connection of homes to Internet is favouring the appearance of an emerging market based on the commercialization of new advanced services for so-called "digital homes".

The development of said services requires an integrated solution for the different domestic systems found in the home such as home automation, audiovisual, communications, data or security

Due to this, the vision of the digital home should be based on creating an open network that can access the outside world and be accessed from outside. Said network should also be programmable and permit developing, integrating and operating advanced services in an easy, useful manner and at a low cost

Likewise, and considering the aforementioned, the concepts described can applied, to what can be called, to use a similar expression, "digital vehicles".

Complying with the premise of producing an open, programmable network both for "digital homes" and for "digital vehicles", we should increasingly consider vehicles, especially cars, as an extension of the home, looking to have interaction between the networks generated by both digital environments.

For this it is necessary to achieve greater integration of vehicles in the home and of the home in vehicles, using current technologies, such as Internet or mobile phone systems, although a series of important drawbacks arise.

Due to the progressive and quick advance of the vehicle industry, vehicles, especially cars, have themselves become autonomous control systems, which incorporate a multitude of devices to control, such as sensors, electric engines or multimedia devices, but which do not allow access from the outside, e.g. from the home, or access to the outside from them, e.g. the home. These drawbacks mean, amongst other things, not being able to control the vehicle status (lights on, doors open or use CDs in the vehicle CD player) from the home, or not being able to make good use of the home resources in the vehicle (e.g. access the music, films or control any other home device desired).

Another important drawback that should be highlighted is that the current vehicles do not distinguish their users, as there is no type of identification thereof of low cost. For this reason, it is typical to make, amongst other things, different vehicle configurations for different users, which means that each time a user uses the vehicle he/she should spend time configuring it according to his wishes or requirements (e.g. adjust mirrors, adjust the seat, or look for the desired radio station).

US-A-6.028.537 discloses an interactive vehicle control system comprising a control unit connected to at least one vehicle device by first connection means, at least one client device connected to the control unit by second connection means, whereon the user interacts, a human-machine interface, and a system logging means.

### Description of the invention

The present invention achieves all the indicated objectives and solves all the aforementioned drawbacks, further providing new technical characteristics that will be disclosed hereunder.

According to one aspect of the invention provides an interactive vehicle control system as claimed in claim 1.

In this way, it is possible to create an open, programmable vehicle control system that permits developing, integrating and operating advanced services in a useful, easy manner and at a low cost. Furthermore, it provides total connectivity of the vehicle, as well as a ubiquitous, secure access which is simple and personalized.

The system permits registering an unlimited number of users, assigning a predetermined or specific user profile to each one within the system. Each user can have different characteristics assigned for each device, for which reason the human-machine interface of the device that is displayed to control or program thereof, is totally dynamic, as it only displays those variables on which the user in question can act. Likewise, each user can configure the system in his/her own way, as, e.g. he/she can indicate that when he/she is validated, the seat adopts a certain position and that the vehicle speed is limited to a determined value. All these technical characteristics are evidently impossible in a system wherein user administration is not performed.

The presence of a user administration means also considerably increases system security, as each user should validate him/herself therein with, e.g. a username and a password.

The presence of a session management means is necessary, amongst other things, to create persistence in the sessions opened by the users, for those transfer protocols that require them. Thus, said session management means converts a series of independent transactions in a continuous status, with the intention of creating the perception of a single user session, delimited by the login and logout to the system.

Furthermore, all the characteristics of the devices to generate the human-machine interfaces are stored in the data storage media, i.e. they are stored external to the vehicle devices, for which reason the devices do not need to store information on the format of these interfaces, nor implement the protocols necessary for their transmission. Both characteristics contribute to greater modularity and portability when changing and/or personalizing the interfaces in question, achieving, in this way, a higher degree of vehicle device abstraction.

The device abstraction means are necessary to control said devices, virtualizing each element that comprises them and meaning that the users that monitor the vehicle devices do not require to have their physical information, nor know the low-level protocols through which said devices are controlled. Furthermore, there should be a device controller for each control technology, which will be that which translates logical actions (e.g. switching on the vehicle lights) into physical actions specific to the control technology.

It should be highlighted that the fact of abstracting the vehicle devices permits any application to access the control and/or manipulation of said devices for their inclusion in the programming of scenes or macros i.e. successive pre-programmed actions according to events.

Preferably, the control unit also comprises a service storage media of services available to the user in accordance with the user administration means.

Said service storage media of available services stores all the services assigned to each one of the users who are registered in the system, so that when a user validates him/herself, the system automatically knows which services the user should have access to.

Also preferably, the control unit comprises update means which maintain the synchronization between the real status and the status saved in the data storage media of the vehicle device

The presence of said update means permits knowing at all times the status of each one of the devices that form the system. Furthermore, they inform all the users connected to the system of any possible modifications in the status of any vehicle device. If there are devices in the system that do not have the capacity to generate events, the conversion of a *poll system* is performed from the update means, i.e. obtaining the status of the device by an explicit question mark, to *event driven* (the users that monitor the device are informed in real time only when events occur).

the users who monitor devices do not need to have physical information available thereon or know the low-level protocols through which the devices are controlled. Furthermore, they permit the use of different control technologies, for which reason there is a large quantity of device types that can be controlled.

Also advantageously, the human-machine interface is a voice recognition/production system.

Said system permits an interaction between the user and the vehicle wherein a direct intervention of the user on the interface is not necessary, instead the interaction is performed remotely, avoiding the possible distraction of the user whilst driving the vehicle. Said characteristic is important when trying to avoid accidents.

The human-machine interface is a page made in a Markup language and, more specifically, in *HTML.*

Furthermore, the transfer protocol server is a H*TTP* server.

In this way, an interface is achieved which is easy to program, useful, low cost and intuitive. Furthermore, it is a totally standardized interface, which permits the simple generation of different pages in *HTML* for each user and each vehicle device from determined parameters for each user and each device established in the system i.e. it permits what can be called a dynamic interface generation. Furthermore, it integrates the system in data networks, more specifically IP-based networks such as Internet, which is fundamental to be able to remotely control the vehicle devices, without having to make large investments or the user having to transport any device to connect to the system since it is practically possible to connect to Internet from wherever the user is.

The user administration means comprises user policy means.

Said user policy means are that which permit discriminating which functionalities are available for each user.

The system logging means comprises system event logs and user logs.

The system event logs are logs wherein the events occurred in the system are detailed, so that possible errors therein can be effectively detected. The user logs are logs wherein all the operations generated by the users who connect to the system are detailed, as well as the vehicle devices controlled by said users.

Preferably, the data storage media for data relating to the vehicle is a database of the configuration parameters and current status of the device.

The control unit also comprises an operating system, which virtualizes all the system hardware resources, a firewall to protect the system and a database engine.

Also advantageously, the client device comprises a display screen.

Said display screens are found in a large variety of devices which can be connected to the system, such as *PDAs*, laptops, *Tablet Pc,* or the screen incorporated in the vehicle for, e.g. *GPS.*

The first connection means, between the control unit and the vehicle device, is a *CAN* interface.

With this, it is possible to use a system which is already known and integrated in most vehicles, used to control the critical signals of said system. It is only necessary to incorporate said *CAN* interface to be able to use the vehicle's *CAN bus.*

The first connection means, between the control unit and the vehicle device, are specifically adapted to the characteristics of each vehicle device.

For each vehicle device, one should study the way to achieve the connection between said device and the control unit, creating a physical and logical interface for the device, which permits dialoguing with the control unit. For common devices in a vehicle, physical communication media such as *CAN bus, OBD-II, MOST* or *MCP* should be used.

Furthermore, the second connection means are multi-channel and asymmetric.

Said characteristics indicate that there are a multiplicity of communication channels between the home and the vehicle, such as *IEEE 802.11, Bluetooth, GPRS* or *DVB*. Furthermore, the upload and download channels can be different, e.g. the vehicle can indicate the information it needs to access through *GPRS* and can receive said information by satellite *(DVB)*.

According to a characteristic of the invention, the user is a system to control home devices.

The system to control home devices is disclosed in the patent application of the same holder filed on the same date as the present one. Therein, it discloses an interactive system to control home devices comprising at least one home device connected to a control unit by first connection means, at least one client device connected to the control unit by second connection means, whereon a user interacts. The control unit comprises a transfer protocol server which establishes contact with at least one human-machine interface connected to the home device and the user and transfers it to the client device, a system logging means, a user administration means, a session management means, data storage media for data relating to the home device, which includes the human-machine interface and home device abstraction means.

With said invention, one creates an open, programmable control system which allows developing, integrating and operating advanced services in an easy useful manner and at a low cost. Furthermore, it permits the remote control of the home devices through data networks, more specifically networks based on IP protocol, such as Internet.

In this way, the vehicle appears to the home as just another home device, which can be controlled from the home, in a similar manner to what occurs with a home automation or access control system. A specific example of this situation would be downloading vehicle control system event log information from the vehicle to the home.

In this situation, we should distinguish two possible scenarios.

A first scenario appears when the vehicle is close to home, e.g. in the garage. In this case the vehicle forms part of the home network and the contents between the home and the vehicle are synchronized.

A second scenario appears when the vehicle is at a distance from the home. In this case, the vehicle is connected to the home, but with less bandwidth than that used in the first scenario, and with the special characteristic that it is connected through public networks, with the consequent security risk, which leads to the use of communication encryption mechanisms, such as *TLS, SSH* or *SSL*.

Another characteristic to highlight is that the user can be a service provider.

For this, the service provider only has to be registered as a system user. Once identified, it normally runs an application, which is what permits providing value added services in the vehicle. Said applications can be generated on demand or by the service providers, using open protocols.

This characteristic permits opening the vehicle to the outside world, which is an important advance in the field we are concerned with, since it is possible to have total remote control of the vehicle, either by the user or by the service providers, who can, e.g. detect a fault in any vehicle device, detect the presence of thieves or detect a fire. Furthermore, using the system of the invention, it is possible to contract or cancel any existing service, without it costing anything in infrastructural terms.

It is also possible that the user is an application responsible for maintaining system integrity, and the connectivity and maintenance of the control unit.

As is evident, there can also exist applications of the vehicle user that allow him/her to remotely access the monitoring, control and status of his/her vehicle.

Furthermore, the device can be a system to control home devices.

In this case, the vehicle appears as just another user of the home control system, which means being able to access any resource or application available in the home from the vehicle, such as, for example, downloading music or video from the home to the vehicle.

In this situation, two possible scenarios can also be differentiated.

A first scenario appears when the vehicle is close to the home, e.g. in the garage. In this case the home forms part of the control system of the vehicle and the contents between the home and the vehicle are synchronized.

A second scenario appears when the vehicle is at a distance from the home. In this case, the home is connected to the vehicle, but with less bandwidth than that used in the first scenario, and with the special characteristic that it is connected through public networks, with the consequent security risk, which leads to the use of communications encryption mechanism, such as *TLS, SSH* or *SSL*.

The device can also be an independent subsystem.

Said subsystem can be, for example, vehicle brake control system, which means that the user, whether he/she is a vehicle user or a service or maintenance provider, directly acts on the subsystem.

Otherwise, the device is an element of an independent subsystem.

If we consider that the independent subsystem is again a vehicle brake control system, said element can be, e.g. a brake pad. Thus, the user acts directly on the brake pad and not on the brake control system which controls it, since the brake pad is considered a vehicle device.

According to another aspect of the invention provides a method to control at least one vehicle device as claimed in claim 23.

Furthermore, step (A) comprises the substeps:
(A.1) The user sends a service request from the client device to a transfer protocol server;
(A.2) The transfer protocol server displays a user identification page in the client device;
(A.3) The user sends the identification data, through the transfer protocol server, to a user administration means for their validation, whose user administration means sends the result of said validation to the transfer protocol server.

The Method also comprises the following steps between steps B and C:
(I) The session management means requests the permits assigned to said validated user to the user policy means, which are sent to the session management means; and
(J) The session management means interrogates a service service storage media to obtain the services available to the user.

Furthermore, the Method also comprises a step, between steps E and F, wherein the vehicle device manipulation event is sent to an update agent.

The Method may also comprise a step, between steps F and G, wherein the vehicle device responds to an update agent, through abstraction means.

If the user validation in the user administration means in substep (A.3) is incorrect, the control returns to the substep (A.2).

### Brief description of the drawings

For a better understanding of all that described, drawings are attached, wherein, schematically, and as a non-restrictive example, a practical embodiment is represented.

In the drawings:
- Figure 1: is a general block diagram of the interactive vehicle control system, object of the invention;
- Figure 2: is a diagram of the architecture of the control unit of the system of figure 1;
- Figure 3: is a functional block diagram of the system in figure 1;
- Figure 4: is a block diagram which shows a first example of interaction between the blocks that form the system represented in figure 3;
- Figure 5: is a block diagram that shows a second example of interaction between the blocks that form the system of figure 3;
- Figure 6: is a block diagram which shows a third example of interaction between the blocks that form the system of figure 3;
- Figure 7: is a schematic drawing of the implementation of a possible example of the system of the invention; and
- Figure 8: is a schematic drawing of a possible human-machine interface for the example of the system of figure 7.

### Description of preferred embodiments

A description of a preferred embodiment will be made below wherein the transfer protocol server is a H*TTP* server, the data network, and more specifically the IP-based network, is Internet, whilst the human-machine interface is a page in *HTML.*

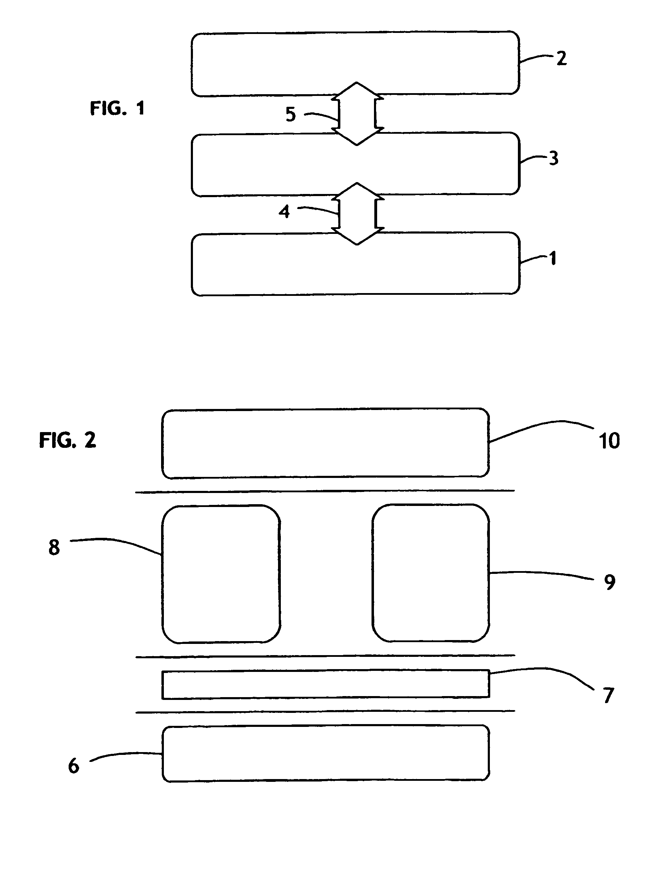

As can be seen in figure 1, the interactive V vehicle control system, object of the invention, has three-layer architecture. A first layer formed by a series of devices 1 internal and external to the vehicle V which aim to be controlled by a second layer of users or applications 2 (developed by one or several service providers), through a resource abstraction layer 3, which permits the applications operating with device abstractions, without needing to know the physical and technological data of said devices 1.

Basically, said structure is comparable with the architecture of a personal computer, wherein there are a series of hardware devices (memory, graphic cards, network cards, hard disks, etc.) which are used by several applications (communications, office automation, etc.) through an operating system that provides an abstraction of the devices to the applications.

The system also has a connectivity network 4 between the resource abstraction layer 3 and the vehicle V devices 1, and a connectivity network 5 between the applications 2 and the resources abstraction layer 3.

Within the vehicle V devices 1 layer, we can include any device that can be controlled and/or programmed by the resources abstraction layer 3 of the devices 1. The concept of device 1 covers both independent subsystems (e.g. a brake control system), and any of the elements dependent on those subsystems (e.g. a brake pad). Thus, when the present description refers to the control of a device 1, it is understood that concerns the possibility of monitoring and/or changing the status of each one of the dependent elements commanded by a subsystem, whilst if it relates to the programming of a device 1, it is understood that it refers to modifying and/or determining the programming of the subsystem as a whole.

The user or applications layer 2, developed by one or several service providers, includes those providers of applications and services offered on the vehicle abstraction provided by layer 3, also called control unit. Thus, the control unit 3 can be defined as a residential gateway, whose objective is to facilitate the provision of advanced services based on connectivity within the vehicle V. These applications or services 2 can be divided in several categories, according to their principal end user (vehicle V user vs. service provider control centre) and the purpose said application or service has (support, display, etc.). With this, it can be determined that there are control applications (or services), responsible for system integrity, value added services in the vehicle, and user applications or services, that provide a service to the vehicle V user, permitting remote access to the monitoring, control, programming and status of the vehicle.

Within said advanced services, we should highlight the synchronization services between the vehicle V and the home, which comprise the automatic synchronization of contents and services, the updating of vehicle V software, the use of the vehicle as a "universal mailbox", as it receives all that related to telephony, fax or e-mail from the home, and the home automation and management of home security; services to connect to the garage, to automatically locate and manage breakdowns; breakdown services, such as automatic call for help or receiving the information relating to traffic incidents; en-route services, which include, e.g. the selection of routes depending on their popularity, and two-way voice communication between the vehicle V and the user; audio, video, game services etc.; and purchase services.

The control unit 3 is formed by an array of applications and device controller means that provide the abstraction of the devices 1 to the applications 2. The objective of said control unit 3 is to eliminate the specific properties of each vehicle V device 1, to offer the applications 2 an abstract view of each of said devices 1, only represented by their generic properties (localization, function, etc.), status and associated actions, avoiding the applications 2 needing to know the specific details of each type of device 1.

The fact that the vehicle devices can be abstracted means any application can access the control and/or manipulation of said devices for their inclusion in the programming of scenes or macros, i.e. successive pre-programmed actions according to events.

The connectivity network 4 permits intercommunication between the control unit 3 and the vehicle V devices 1. Said connectivity is based on vehicle protocols, such as *CAN* bus, *OBD-II, MOST* or *MCP,* especially in the case of devices internal to the vehicle. In those cases when it is not possible to use said protocols, it is necessary to obtain, for each device 1, a physical and logical interface which permits them to communicate with the control unit 3. Thus, if the device is a home control system, the protocol can be based, for example, on the *Wi-Fi* protocols or in public networks.

The connectivity network 5 permits intercommunication between the control unit 3 and the applications or services 2. The physical means of transport is determined by the technology of each system, depending on the location of the vehicle V in relation to the users or applications 2, and the logical interfaces are performed by known *APIs*, using open technologies (*OSGi, XML*, etc.).

Next, a more exhaustive description of the control unit 3 will be made with the aid of the figures.

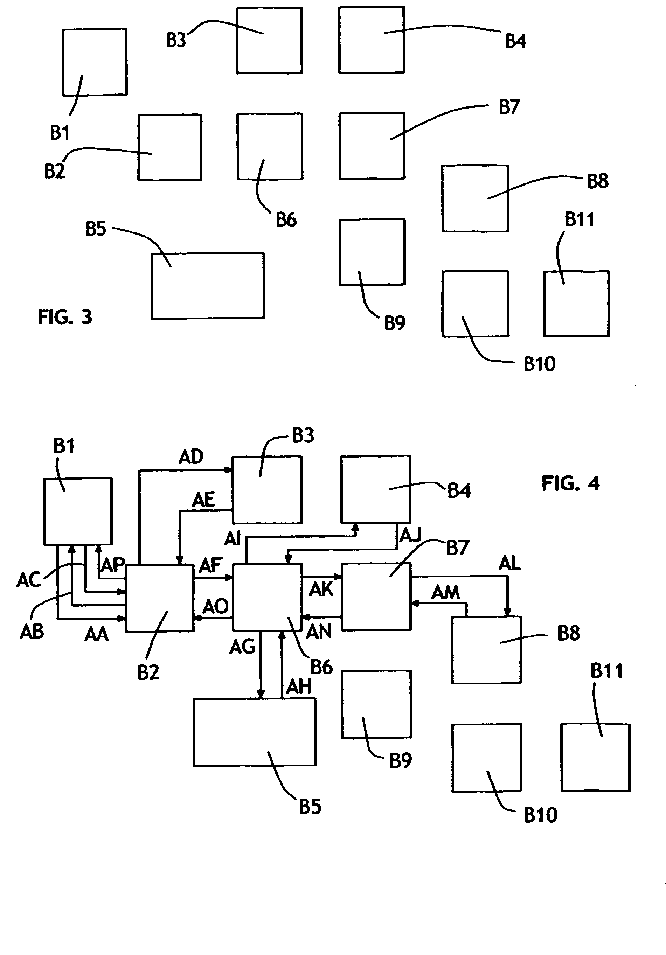

In figure 2 it can be seen that, architecturally, the control unit 3 comprises a connected vehicle V device 1 controller module 6; an operating system 7 which virtualizes all the system hardware resources; a system software module 8, which includes the system services that are not usually provided by the operating system 7; a control unit 3 software module 9 that fundamentally permits providing advanced system services; applications software module 10, which can be defined based on the disclosed architecture.

The device 1 controller module 6 is the part closest to the hardware and its main function is controlling the physical "protocols" of communication between the control unit 3 and the devices 1.

The system software module 8, as previously mentioned, includes those system services that the operating system 7 does not usually provide, but that, due to their nature, form part of the basic connectivity services. Among them we should highlight the Firewalls, responsible for the system security or *HTTP* servers.

The control unit 3 software module 9 relates to two open development standards.

The first standard is *OSGi*, which defines a framework which permits the creation of services that can be remotely installed and maintained, and that can be developed in accordance with the architecture defined by *OSGi*. Said framework is run on a *Java Virtual Machine,* which means that any development in *OSGi* can be run on any platform.

The second standard is *.NET*, which defines a communications architecture between systems connected by open technologies such as *XML or SOAP.* Furthermore, it is the basis for the *WebServices* advocated by Microsoft.

The applications software module 10 is that which permits logical communication with other systems.

A description will be made below of the functional block diagram of the system starting from figure 3, assuming, as has been said previously, that the transfer protocol server is a *HTTP* server, whilst the human-machine interface is a page in *HTML.*

The vehicle control system has a client block B1 (*HTML* Browser) whereon a system user 2 interacts, said block B1 being a Web browser in accordance with *HTTP* standards, a HTTP server block B2, which is the single interface point between the user 2 and the rest of the system, including the devices 1 present in the vehicle, a user administration block B3, which performs the functions of authentication, authorization and accounting; a user policy block B4, which is complemented with block B3 and has the objective of discriminating the available functionalities for each user 2; a system logging means block B5, which logs the operations and events which occur in the system, in an event log and user log. The event log details messages from the different parts of the system, which subsequently serve to diagnose possible problems, whilst all those operations performed by the user or by the controlled parts of the system are saved in the user log. So as to avoid unnecessary logs, it should be determined which actions should generate information and which should not.

The user administration block B3 performs, as has been said, the functions of authentication, authorization and accounting, understanding by authentication the univocal user 2 identification Method in the system (the most typical method is the use of a username and a password although more sophisticated methods also exist), by authorization, the Method of verifying which functions the authenticated user 2 has access to (normally said Method is performed by user profiles and file systems), and by accounting, the Method whereby logs of actions for each user 2 are established, for the purpose of, e.g. determining possible security violations, establishing detailed invoicing or diagnosing system problems.

The control unit 3 also comprises a session management means block B6, which, amongst other things, and depending on the transfer protocols that require it, create persistence in user 2 sessions, converting a series of independent transactions (e.g. *clicks* during a session) in a continuous status to create the perception of a single user 2 session, starting the user sessions and maintaining a status table of all sessions in progress, with the aid of the user administration block B3; a service storage media block B7 which, once the session has started, presents the services available to the user 2 in accordance with the policies that have been previously defined in the user administration block B3; a data storage B8 (Car database) block, such as a database, which stores the configuration of the different devices 1 in the vehicle V, as well as its current status; an update agent block B9, which maintains the synchronization between the real status of the vehicle V devices 1 and the status logged by the system, and communicates it to all those users that are monitoring said status at that time, a device management means block B10, wherefrom the different devices 1 in the vehicle V are controlled and each device is virtualized, so that the users 2 that monitor said devices 1 do not need to have the physical information on them, or know the low-level protocols whereby said devices are controlled; and a device controller means block B11, which is what performs the conversion of logical actions into physical actions specific to the control technology, there being a device controller for each control technology

Figure 4 shows a first example of interaction between the blocks, which form the control unit 3. Said example refers to the initialization and identification of a user 2 in the vehicle V control system. In said figure, it can be observed that the Method is initialized when a user 2 acts on the client block B1, so that said block B1 requests AA a service to the HTTP server block B2. Block B2 responds by presenting AB a login (username and password) page. After the user 2 enters AC his/her credentials, the user administration block B3 checks AD that they are correct. Both if they are correct and if they are not, block B3 responds AE to block B2. If said block B2 receives a negative response, it again presents AB the login page to the user. In the case of affirmative response, a new session is established AF, for which the session management means block B6 saves AG, AH a log in the system logging means block, and requests Al, AJ user policy block B4 for the permits assigned to the user 2. Subsequently, block B6 interrogates AK the service storage media block B7 on the services available for the user 2, and obtains AL, AM a current representation of the system status, from the car database block B8. Finally, the information is presented AN, AO, AP to the user by a page in *HTML* 11 through the client block B1.

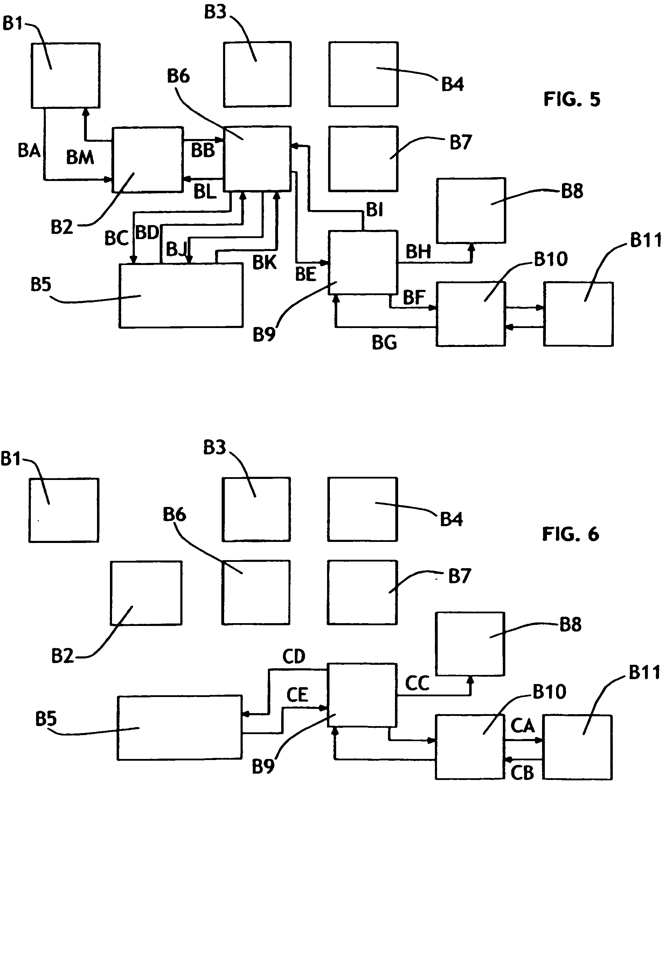

In figure 5 we can see a block diagram that shows a second example of interaction between the blocks that form the control unit 3, wherein a manipulation of a vehicle V device 1 is performed. For this, it is understood that the initialization and identification Method disclosed for figure 4 has been correctly finalized.

In this case, the client block B1 has access to the generation BA of a device 1 manipulation event through the page in *HTML* 11, which reaches BB the session management means block B6, which saves BC, BD a log of the request of the event in the system logging means block B5. Said request passes BE to update agent block B9, which transfers it BF to the vehicle device 1 for its manipulation, through device management means block B10 and device controller means B11. Block B9 receives BG the response from the device 1 after its manipulation, and updates BH block B8 and returns B1 to block B6, which, after saving BJ, BK another result log in the system logging means block B5, communicates BL, BM the result to the user 2, by the page in *HTML* 11, through the client block B1.

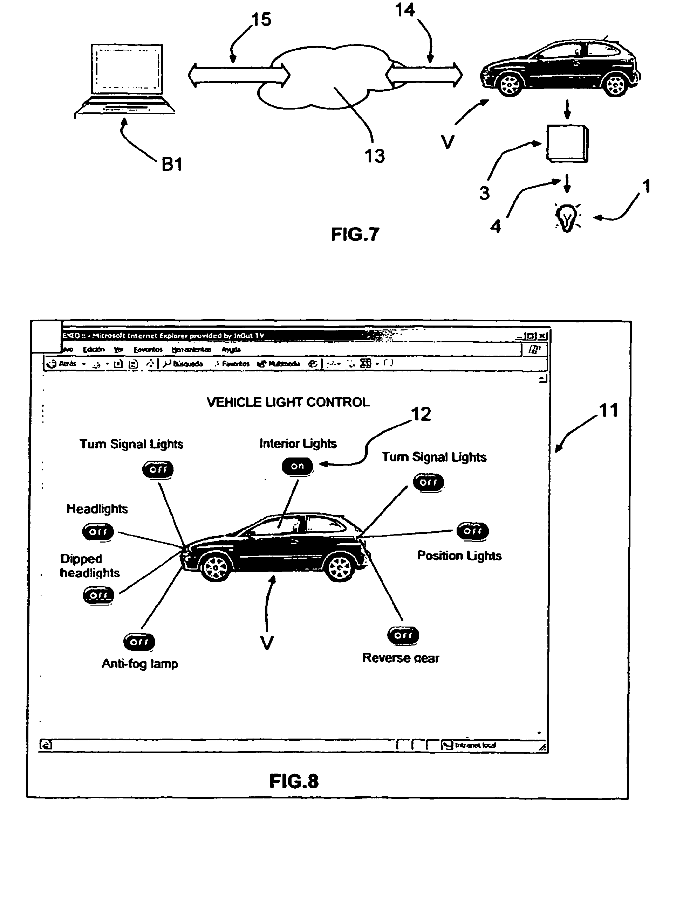

Figure 6 represents a third example of interaction between the blocks which constitute the control unit 3, wherein a synchronization of the status of the vehicle V devices 1 is performed. As can be easily deduced from the figure, the synchronization processes can be independent from the existence of users 2 who are monitoring the status of the devices 1. The update agent block B9 interrogates CA the devices 1 which cannot generate events. Any device that undergoes a change of status informs CB said block B9, either actively, or after receiving a status request. Block B9 then updates CC the car database block B8, and saves CD, CE an event log in the system logging means block B5.

Next, a specific embodiment of the invention will be disclosed, based on the system and on the Method, object of the invention, using figures 7 and 8. In said description, the devices 1 are connected to the control unit 3 by the appropriate protocol 4 *(CAN bus, MOST, MCP,* etc.) for each device 1. It is presumed that the device to be remotely manipulated are interior lights of the vehicle V which have remained switched on after the driver has parked the vehicle in the garage at his/her house.

The user 2 of the vehicle V control system is, for example, the insurance company of the vehicle V, which offers a vehicle security service. It should be highlighted that the client block B1 is a personal computer.

The page in *HTML* 11 (figure 8) through which the vehicle V lights 1 are controlled is shown on the screen of a personal computer B1 located in the offices of the insurance company. Said page 11 appears on the screen of the computer B1 due to the fact that the lights 1 inside the vehicle V are detected as switched on once the insured party has parked the vehicle in the garage. The fact that said lights 1 are switched on is shown in the page in *HTML* 11 through a button 12 in the *ON* position. To switch off the interior lights 1, it is necessary to click on said button 12, which is automatically positioned in the *OFF* position, as are the other buttons shown in figure 8.

The control unit 3 is connected 5 to the personal computer B1 by Internet 13 by a 256 kbps download and 128 kps upload ADSL line 14, whilst the personal computer B1 of the insurance company, uses a cable 15 Internet 13 connection.

Firstly, to be able to offer the service, the insurance company should be registered as a system user 2. It is presumed that this is already the case. From hereon, an insurance company employee tries to connect to the system using a personal computer B1. For this, he/she sends AA a service request to the *HTTP* server B2 through Internet 13, which shows AB, through Internet 13, an identification page in *HTML,* on the personal computer screen B1. The employee sends AC the data to the *HTTP* server B2, which it sends AD to the user administration block B3, for its validation. Said block B3 returns AE an affirmative response to the *HTTP* server B2, achieving a correct validation from the insurance company.

Subsequently, the *HTTP* server B2 sends AF the company identification data to the session management means block B6, to start a session and save AG, AH the company validation in the system logging means block B5. Once this action has been performed, the session management means block B6 sends Al the company data to the user policy block B4 to obtain AJ the permits assigned to said company. Then, the session management means block B6 interrogates AK the service directly block B7 to obtain the services available for the company. In this case, the company has access to all the critical devices 1 of the vehicle V.

At the same time, the service storage media block B7 interrogates AL the car database block B8 to obtain AM the current status of the devices 1 which can be controlled by the company. Said status is sent AN, AO to the *HTTP* server B2 so that it is displayed AP through the *HTML* page 11 of figure 8. In the present preferred embodiment, when the status of the devices 1 is verified AM is when the interior lights 1 of the vehicle V which have remained switched on are detected and the system shows the page in *HTML* 11 of figure 8 to the company employee.

In said figure, it can be seen that, on the screen of the personal computer B1, the drawing of the vehicle is shown wherein all the lights it has are listed. Furthermore, each item is accompanied by a button to change the status of said lights. As can be verified, all the buttons are in the OFF position, except that of the interior lights 1, which is in ON. Simply clicking on one of the buttons changes the status of the light referred to.

For this, the insurance company employee clicks on the button 12 of the interior lights 1, to switch them off. A manipulation event of said lights 1 is generated internally, which is sent BA to the *HTTP* server B2. Subsequently, said *HTTP* server sends BB the event to session management means block B6, which generates BC, BD the event log in the system logging means block B5. Furthermore, block B6 sends BE the event to the update agent block B9, which takes it BF to the lights through the device management means block B10 and the device controller means block B11, and switches them off.

Once switched on, the lights send BG, through blocks B10 and B11, an acknowledgement to update agent block B9. Said block B9 updates BH the status of the lights in the car database block B8, and sends BI the response to the session management means block B6, which logs BJ, BK the response in the system logging means block B5. Then, block B6 sends BL the response to the *HTTP* server B2, which modifies BM the page in *HTML* 11, changing the interior lights 1 from *ON* to *OFF.* Furthermore, the employee can see the real status of the lights through a camera located inside the vehicle V. The image of said camera can be shown in the page in *HTML* 11 shown in figure 8.

Despite the fact that a particular embodiment of the present invention has been disclosed and represented, it is evident that someone skilled in the art can introduce variants and modifications, or substitute the details for other technically equivalent ones, without moving away from the scope of protection defined by the attached claims.

For example, the user validation in the system can be done in various ways. The existing possibilities are varied, being able, for example, to identify the user from his/her voice, fingerprints, iris or from a transponder that stores any user identification data.

## Claims

1. Interactive vehicle (V) control system comprising a control unit (3) connected to at least one vehicle (V) device (1) by first connection means (4), at least one client device (B1) connected to the control unit (3) by second connection means (5), whereon the user (2) interacts, whose control unit (3) comprises a transfer protocol server (82) which transfers at least one human-machine interface (11) to the client device (B1), and a system logging means (B5), **characterized in that** the human-machine interface (11) is associated to at least one device (1) and to the user (2), and **in that** the control unit (3) also comprises user administration means (B3), session management means (B6) established by the user, data storage media (B8) for data relating to the device (1) which include the human-machine interface (11) associated to the device (1) and to the user (2), and device (1) abstraction means (B10, B11) that virtualize the device, whereby the device can be controlled without having its physical information and the low-level control protocols stored on it.

2. Control system according to claim 1, **characterized in that** the control unit (3) comprises a service storage media (B7) available for the user (2) in accordance with the user administration means (B3).

3. Control system according to any of the preceding claims, **characterized in that** the control unit (3) also comprises update means (B9) which maintain the synchronization between the real status and the saved status in the data storage media (B8), of the vehicle (V) device (1).

4. Control system according to any of the preceding claims, **characterized in** the device controller means performs the conversion of logical actions into physical actions specific to the control technology, there being a device controller for each control technology.

5. Control system according to any of the preceding claims, **characterized in that** the human-machine interface is a voice recognition/production system (11).

6. Control system according to any of the preceding claims, **characterized in that** the human-machine interface is a page (11) made in a markup language.

7. Control system according to claim 6, **characterized in that** the page made in a markup language is a page (11) in *HTML.*

8. Control system according to any of the preceding claims, **characterized in that** the transfer protocol server is an HTTP server (B2).

9. Control system according to any of the preceding claims, **characterized in that** the user administration means (B3) comprise user policy means (B4).

10. Control system according to any of the preceding claims, **characterized in that** the system logging means (B5) comprise system event logs, and user (2) logs.

11. Control system according to any of the preceding claims, **characterized in that** data storage media (B8) for data relating to the vehicle (V) device (1) are a database with the configuration parameters and the current status of the device (1).

12. Control system according to any of the preceding claims, **characterized in that** the control unit (3) also comprises an operating system (7), which virtualizes all the system hardware resources, a firewall to protect the system and a database (B8) engine.

13. Control system according to any of the preceding claims, **characterized in that** the client device (B1) comprises a display screen.

14. Control system according to any of the preceding claims, **characterized in that** the first connection means, between the control unit (3) and the vehicle (V) device (1), are a *CAN* interface (4).

15. Control system according to any of the preceding claims, **characterized in that** the first connection means (4), between the control unit (3) and the vehicle (V) device (1), are specifically adapted to the characteristics of each vehicle (V) device (1).

16. Control system according to any of the preceding claims, **characterized in that** the second connection means (5) are multi-channel and asymmetric.

17. Control system according to any of the preceding claims, **characterized in that** the user is a home device control system (2).

18. Control system according to any of the preceding claims, **characterized in that** the user is a service provider (2).

19. Control system according to any of the preceding claims, **characterized in that** the user is an application (2) responsible for maintaining the system integrity, and the connectivity and maintenance of the control unit (3).

20. Control system according to any of the preceding claims, **characterized in that** the vehicle device is a home device control system (1).

21. Control system according to any of the preceding claims, **characterized in that** the device is an independent subsystem (1).

22. Control system according to any of the preceding claims, **characterized in that** the device is an element of an independent subsystem (1).

23. Method to control at least one vehicle (V) device (1) comprising a control unit (3) connected to said vehicle (V) device (1) by first connection means (4), whose control unit (3) is also connected to at least one client device (B1) by second connection means (5), **characterized in that** it comprises the following steps:
(A) A user identifies him/herself through the client device (B1) by identification data;
(B) The transfer protocol server (B2) sends (AF) the user (2) identification data to the session management means (B6) to start a session and save (AG,AH) the user (2) validation in system logging means (B5);
(C) The current status of the vehicle (V) device (1) is requested (AL) to the data storage media (B8), whose current status is sent (AM, AN, AO) to the transfer protocol server (B2), which it displays (AP) to the user (2), through the client device (B1), using a corresponding human-machine interface (B1);
(D) The user (2) generates a vehicle (V) device (1) manipulation event, interacting with the human-machine interface (11) displayed on the client device (B1), whose event is sent (BA) to the transfer protocol server (B2);
(E) Said server (B2) sends (BB) the device (1) manipulation event generated by the user (2), to the session management means (B6), which commands (BC, BD) the generation of the event in the system logging means (B5) to be saved;
(F) The event is sent (BF) to the vehicle (V) device (1) through abstraction means (B10, B11) of said device, to attain the manipulation thereof; the abstraction means virtualizing the device, whereby the device can be controlled without having its physical information and the low-level control protocols stored on it.
(G) The information of the current status of the device (1) is updated (BH) in the data storage media (B8); and
(H) The vehicle device (1) response is sent (BI) to the session management means (B6), which, in turn, logs (BJ, BK) the response in the system logging means (B5), whose session management means (B6) send (BL) the device (1) response to the transfer protocol server (B2), which displays it (BM), through the client device (B1), to the user (2), using the human-machine interface (11).

24. Method according to claim 23, **characterized in that** the step (A) comprises the following substeps:
(A.1) A user (2) sends (AA) a service request from the client device (B1) to a transfer protocol server (B2);
(A.2) The transfer protocol server (B2) displays (AB) a user (2) identification page in the client device (B1);
(A.3) The user (2) sends (AC, AD) the identification data, through the transfer protocol server (B2), to a user administration means (B3) for their validation, whose user administration means (B3) send (AE) the result of said validation to the transfer protocol server (B2).

25. Method according to either of claims 23 or 24, **characterized in that** it also comprises the following steps between steps B and C:
(I) The session management means (B6) request (Al) the permits assigned to said validated user (2) to the user policy means (B4) which are sent (AJ) to the session management means (B6); and
(J) The session management means (B6) interrogate (AK) the service storage media (B7) to obtain the services available to the user (2).

26. Method according to any of claims 23 to 25, **characterized in that** it also comprises a step, between steps E and F, wherein the vehicle (V) device (1) manipulation event is sent (BE) to update means (B9).

27. Method according to any of claims 23 to 26, **characterized in that** it also comprises a step, between steps F and G, wherein the vehicle (V) device (1) responds to (BG) the update means (B9), through the abstraction means (B10, B11).

28. Method according to any of claims 24 to 27, **characterized in that** if the user (2) validation in the user administration means (B3) in substep (A.3) is incorrect, the control returns to substep (A.2).

## Patentansprüche

1. Interaktive Fahrzeugleittechnik (V) mit einer Steuereinheit (3), die an mindestens ein Fahrzeug- (V) Gerät (1) über erste Anschlussvorrichtungen (4) angeschlossen ist, mindestens einem Client Device (B1), das an die Steuereinheit (3) über zweite Anschlusselemente (5) angeschlossen ist, worauf der Benutzer (2) interagiert, wobei die Steuereinheit (3) einen Transferprotokoll-Server (B2) umfasst, der mindestens eine Mensch-Maschine-Schnittstelle (11) an das Client Device (B1) überträgt, und ein Systemaufzeichnungselement (B5), **gekennzeichnet dadurch, dass** die Mensch-Maschinen-Schnittstelle (11) mindestens einem Gerät (1) und dem Benutzer (2) zugeordnet ist, und **dadurch**, dass die Steuereinheit (3) auch Benutzerverwaltungsmedien (B3), Sitzungsverwaltungs-Medien (B6) umfasst, die vom Benutzer festgelegt sind, Datenspeicherungsmedien (B8) für auf das Gerät (1) bezogene Daten, die die Mensch-Maschinen-Schnittstelle (11) einschließt, die dem Gerät (1) und dem Benutzer (2) zugeordnet ist, und Geräte- (1) Abstraktionsmedien (B10, B11), die das Gerät virtualisieren, wodurch das Gerät kontrolliert werden kann, ohne über dessen physikalischen Informationen und darauf gespeicherten unteren Steuer-Protokolle zu verfügen.

2. Steuersystem nach Anspruch 1, **gekennzeichnet dadurch, dass** die Steuereinheit (3) ein für den Benutzer (2) verfügbare Dienstspeicherungsmedium (B7) in Übereinstimmung mit den Benutzerverwaltungsmedien (B3) umfasst.

3. Steuersystem nach einem der vorangehenden Patentansprüche, **gekennzeichnet dadurch, dass** die Steuereinheit (3) auch Aktualisierunasmedien (B9) umfasst, die die Synchronisation zwischen dem wirklichen Status und dem gesicherten Status in den Datenspeicherungsmedien (B8) des Fahrzeug- (V) Geräts (1) führen.

4. Steuersystem nach einem der vorangehenden Patentansprüche, **gekennzeichnet dadurch, dass** der Device Controller (Gerätesteuerung) die Umwandlung von logischen Handlungen in steuertechnisch-spezifische physische Handlungen durchführt, wo ein Device Controller für jede Steuertechnik vorhanden ist.

5. Steuersystem nach einem der vorangehenden Patentansprüchen, **gekennzeichnet dadurch, dass** die Mensch-Maschinen-Schnittstelle ein Stimmenerkennungs-/Produktions-System (11) ist.

6. Steuersystem nach einem der vorangehenden Patentansprüchen, **gekennzeichnet dadurch, dass** die Mensch-Maschinen-Schnittstelle eine in einer Aufzeichnungssprache erstellte Seite (11) ist.

7. Steuersystem nach Anspruch 6, **gekennzeichnet dadurch, dass** die Seite, die in einer Aufzeichnungssprache erstellt wurde, eine Seite (11) in HTML ist.

8. Steuersystem nach einem der vorangehenden Patentansprüchen, **gekennzeichnet dadurch, dass** der Transferprotokoll-Server ein HTTP-Server (B2) ist.

9. Steuersystem nach einem der vorangehenden Patentansprüche, **gekennzeichnet dadurch, dass** die Benutzerverwaltungsmedien (B3) Sicherheitskonfigurationen eines Anwenders (B4) umfassen.

10. Steuersystem nach einem der vorangehenden Patentansprüche, **gekennzeichnet dadurch, dass** die Systemaufzeichnungsmedien (B5) Systemereignisprotokolle und Benutzerprotokolle (2) umfassen.

11. Steuersystem nach einem der vorangehenden Patentansprüche, **gekennzeichnet dadurch, dass** Datenspeicherungsmedien (B8) für auf das Fahrzeug- (V) Gerät (1) bezogene Daten eine Datenbank mit den Konfigurationsparametern und dem aktuellen Status des Geräts (1) sind.

12. Steuersystem nach einem der vorangehenden Patentansprüche, **gekennzeichnet dadurch, dass** die Steuereinheit (3) auch ein Betriebssystem (7) umfasst, das alle Systemhardware-Ressourcen, eine Feuerschutzwand zum Schutz des Systems und einen Datenbank-Motor (B8) virtualisiert.

13. Steuersystem nach einem der vorangehenden Patentansprüche, **gekennzeichnet dadurch, dass** das Client Device (B1) einen Bildschirm umfasst.

14. Steuersystem nach einem der vorangehenden Patentansprüche, **gekennzeichnet dadurch, dass** die ersten Anschlussmedien zwischen der Steuereinheit (3) und dem Fahrzeug- (V) Gerät (1) eine CAN-Schnittstelle (4) sind.

15. Steuersystem nach einem der vorangehenden Patentansprüche, **gekennzeichnet dadurch, dass** die ersten Anschlussmedien (4), zwischen der Steuereinheit (3) und dem Fahrzeug- (V) Gerät (1) spezifisch den Charakteristiken jedes Fahrzeug- (V) Geräts (1) angepasst sind.

16. Steuersystem nach einem der vorangehenden Patentansprüche, **gekennzeichnet dadurch, dass** die zweiten Anschlussmedien (5) mehrkanalig und asymmetrisch sind.

17. Steuersystem nach einem der vorangehenden Patentansprüche, **gekennzeichnet dadurch, dass** der Anwender ein Hauptgerät-Steuersystem (2) (Home Device Control System) ist.

18. Steuersystem entsprechend einem der vorangehenden Patentansprüche, **gekennzeichnet dadurch, dass** der Anwender ein Service Provider (2) (Dienstanbieter) ist.

19. Steuersystem nach einem der vorangehenden Patentansprüche, **gekennzeichnet dadurch, dass** der Benutzer ein Anwendungsserver (2) ist, der für das Beibehalten der Systemintegrität, die Anschlussfähigkeit und die Wartung der Steuereinheit (3) verantwortlich ist.

20. Steuersystem nach einem der vorangehenden Patentansprüche, **gekennzeichnet dadurch, dass** das Fahrzeuggerät ein Hauptgerät-Steuersystem (1) ist.

21. Steuersystem nach einem der vorangehenden Patentansprüche, **gekennzeichnet dadurch, dass** das Gerät ein unabhängiges Subsystem (1) ist.

22. Steuersystem nach einem der vorangehenden Patentansprüche, **gekennzeichnet dadurch, dass** das Gerät ein Element eines unabhängigen Subsystems (1) ist.

23. Verfahren zur Steuerung von mindestens einem Fahrzeug- (V) Gerät (1) mit einer Steuereinheit (3), die an besagtes Fahrzeug- (V) Gerät (1) über erste Medien (4) angeschlossen ist, wobei diese Steuereinheit (3) auch mindestens an ein Client Device (B1) über zweite Anschlussmedien (5) angeschlossen ist, **gekennzeichnet dadurch, dass** es folgende Phasen umfasst:
A) Ein Anwender identifiziert sich selbst über das Client Device (B1) durch Identifikationsdaten;
(B) Der Transferprotokoll-Server (B2) sendet (AF) die Benutzer-Identifikationsdaten (2) an die Sitzungsverwaltungs-Medien (B6), um eine Sitzung zu starten und die (AG, AH) Benutzer-Validierung (2) in den Systemprotokollmedien (B5) zu sichern;
(C) Der aktuelle Status des Fahrzeug- (V) Geräts (1) wird angefordert (AL) bei den Datenspeicherungsmedien (B8), wobei der aktuelle Status (AM, AN, AO) an den Transferprotokoll-Server (B2) gesandt wird, welcher es (AP) dem Benutzer (2) über das Client Device (B1) anzeigt, indem eine entsprechende Mensch-Maschinen-Schnittstelle (B1) benutzt wird;
(D) Der Benutzer (2) erzeugt ein Fahrzeug- (V) Geräts- (1) Manipulationsereignis, das mit der Mensch-Maschinen-Schnittstelle (11) zusammenwirkt, die auf dem Client Device (B1) angezeigt wird, wobei das Ereignis (BA) an den Transferprotokoll-Server (B2) gesandt wird;
(E) Besagter Server (B2) sendet (BB) das Geräte- (1) Manipulationsereignis, das durch den Benutzer (2) erzeugt worden ist, an das Sitzungsverwaltungs-Medien (B6), das (BC, BD) die Herstellung des im Systemprotokollmedium (B5) zu sichernden Ereignisses steuert;
(F) Das Ereignis wird (BF) an das Fahrzeug- (V) Gerät (1) über Abstraktionsmedien (B10, B11) besagten Geräts gesandt, um deren Manipulation zu erreichen, wobei das Abstraktionsmedium das Gerät virtualisiert, wodurch das Gerät gesteuert werden kann, ohne über dessen physischen Informationen und die darauf gespeicherten Steuerprotokolle unterer Ebene zu verfügen.
(G) Die Informationen des aktuellen Status des Geräts (1) wird (BH) in den Datenspeicherungsmedien (B8) aktualisiert, und
(H) Die Reaktion des Fahrzeuggeräts (1) wird (B1) an die Sitzungsverwaltungs-Medien (B6) gesandt, welche der Reihe nach (BJ, BK) die Reaktion im Systemprotokollmedium (B5) protokollieren, wobei die Sitzungsverwaltungs-Medien (B6) die Gerätereaktion (1) an den Transferprotokoll-Server (B2) senden (BL), welcher es (BM) über das Client Device (B1) dem Benutzer (2) anzeigt, unter Gebrauch der Mensch-Maschinen-Schnittstelle (11).

24. Verfahren nach Anspruch 23, **gekennzeichnet dadurch, dass** die Phase (A) die folgenden Unterstufen umfasst:
(A.1) Ein Benutzer (2) sendet (AA) einen Dienstwunsch vom Client Device (B1) an einen Transferprotokoll-Server (B2);
(A.2) Der Transferprotokoll-Server (B2) zeigt (AB) eine Benutzer- (2) Identifikationsseite im Client Device (B1) an;
(A.3) Der Benutzer (2) sendet (AC, AD) die Identifikationsdaten über den Transferprotokoll-Server (B2) an ein Benutzerverwaltungsmedium (B3) für deren Validierung, wobei das Benutzerverwaltungsmedium (B3) dem (AE) das Ergebnis von besagter Validierung an den Transferprotokoll-Server (B2) sendet.

25. Verfahren entsprechend der Patentansprüche 23 oder 24, **gekennzeichnet dadurch, dass** dieses auch die folgenden Phasen zwischen den Phasen B und C umfasst:
(I) Die Sitzungsverwaltungs-Medien (B6) fordern (Al) die Erlaubnisse an, die dem besagten validierten Benutzer (2) für die Sicherheitskonfigurationen des Anwenders (B4) zugeordnet sind, die (AJ) an die Sitzungsverwaltungs-Medien (B6) gesandt werden, und
(J) die Sitzungsverwaltungs-Medien (B6) befragen (AK) das Dienstspeicherungsmedium (B7), um die dem Benutzer (2) zur Verfügung stehenden Dienstleistungen zu erhalten.

26. Verfahren nach einem der Ansprüche 23 bis 25, **gekennzeichnet dadurch, dass** dieses auch eine Phase zwischen den Phasen E und F umfasst, wobei das Fahrzeug- (V) Gerät (1)- Manipulationsereignis an (BE) gesandt wird, um die Medien (B9) zu aktualisieren.

27. Verfahren nach einem der Ansprüche 23 bis 26, **gekennzeichnet dadurch, dass** dieses auch eine Phase zwischen den Phasen F und G umfasst, wobei das Fahrzeug-(V) Gerät (1) (BG) die Aktualisierungsmedien (B9) antwortet.

28. Verfahren nach einem der Ansprüche 24 bis 27, **gekennzeichnet dadurch, dass**, wenn die Benutzer-Validierung (2) in den Benutzerverwaltungsmedien (B3) in Unterstufe (A.3) unkorrekt ist, die Steuerung zur Unterstufe (A.2) zurückkehrt.

## Revendications

1. Système de contrôle interactif de véhicule (V) comprenant une unité de contrôle (3) connectée à au moins un dispositif (1) de véhicule (V) par des premiers moyens de connexion (4), au moins un dispositif client (B1) connecté à l'unité de contrôle (3) par des deuxièmes moyens de connexion (5), sur lequel interagit l'utilisateur (2), laquelle unité de contrôle (3) comprend un serveur de protocole de transfert (B2) qui transfère au moins une interface humain-machine (11) au dispositif de client (B1), et un moyen de journalisation du système (B5), **caractérisé en ce que** l'interface humain-machine (11) est associée à au moins un dispositif (1) et à l'utilisateur (2), et **en ce que** l'unité de contrôle (3) comprend également des moyens d'administration de l'utilisateur (B3), des moyens de gestion de session (86) établis par l'utilisateur, des medias de stockage de données (B8) pour les données concernant le dispositif (1) qui incluent l'interface humain-machine (11) associée au dispositif (1) et à l'utilisateur (2), et des moyens d'abstraction (B10, B11) du dispositif (1) qui virtualisent le dispositif, grâce auxquels le dispositif peut être contrôlé sans y stocker son information physique ni les protocoles de contrôle de bas niveau.

2. Système de contrôle selon la revendication 1, **caractérisé en ce que** l'unité de contrôle (3) comprend des médias de stockage de services (B7) disponibles pour l'utilisateur (2) conformément aux moyens d'administration de l'utilisateur (B3).

3. Système de contrôle selon l'une des revendications précédentes, **caractérisé en ce que** l'unité de contrôle (3) comprend également des moyens d'actualisation (B9) qui maintiennent la synchronisation entre le statut réel et le statut sauvegardé dans les médias de stockage des données (B8), du dispositif (1) de véhicule (V).

4. Système de contrôle selon l'une des revendications précédentes, **caractérisé en ce que** le moyen de contrôle du dispositif effectue la conversion d'actions logiques en actions physiques spécifiques par rapport à la technologie de contrôle, un contrôleur de dispositif étant présent pour chaque technologie de contrôle.

5. Système de contrôle selon l'une des revendications précédentes, **caractérisé en ce que** l'interface humain-machine est un système de reconnaissance-production de voix (11).

6. Système de contrôle selon l'une des revendications précédentes, **caractérisé en ce que** l'interface humain-machine est une page (11) réalisée en langage de balisage.

7. Système de contrôle selon la revendication 6, **caractérisé en ce que** la page faite en langage de balisage est une page (11) de HTML.

8. Système de contrôle selon l'une des revendications précédentes, **caractérisé en ce que** le serveur de protocole de transfert est un serveur HTTP (B2).

9. Système de contrôle selon l'une des revendications précédentes, **caractérisé en ce que** les moyens d'administration de l'utilisateur (B3) comprennent des moyens de normes d'utilisateur (B4).

10. Système de contrôle selon l'une des revendications précédentes, **caractérisé en ce que** les moyens de journalisation du système (B5) comprennent des logs d'événement du système, et des logs d'utilisateur (2).

11. Système de contrôle selon l'une des revendications précédentes, **caractérisé en ce que** les médias de stockage de données (B8) pour des données concernant le dispositif (1) de véhicule (V) consistent en une base de données comprenant des paramètres de configuration et le statut actuel du dispositif (1).

12. Système de contrôle selon l'une des revendications précédentes, **caractérisé en ce que** l'unité de contrôle (3) comprend également un système d'exploitation (7), qui virtualise toutes les ressources de matériel du système, une barrière de sécurité pour protéger le système et un moteur de base de données (B8).

13. Système de contrôle selon l'une des revendications précédentes, **caractérisé en ce que** le dispositif client (B1) comprend un écran.

14. Système de contrôle selon l'une des revendications précédentes, **caractérisé en ce que** les premiers moyens de connexion, entre l'unité de contrôle (3) et le dispositif (1) de véhicule (V) consistent en une interface CAN (4).

15. Système de contrôle selon l'une des revendications précédentes, **caractérisé en ce que** les premiers moyens de connexion (4), entre l'unité de contrôle (3) et le dispositif (1) de véhicule V), sont particulièrement adaptés aux caractéristiques de chaque dispositif (1) de véhicule (V).

16. Système de contrôle selon l'une des revendications précédentes, **caractérisé en ce que** les deuxièmes moyens de connexion (5) sont multivoies et asymétriques.

17. Système de contrôle selon l'une des revendications précédentes, **caractérisé en ce que** l'utilisateur est un système de contrôle domestique du dispositif (2).

18. Système de contrôle selon l'une des revendications précédentes, **caractérisé en ce que** l'utilisateur est un fournisseur de services (2).

19. Système de contrôle selon l'une des revendications précédentes, **caractérisé en ce que** l'utilisateur est responsable de l'application (2) afin de maintenir l'intégrité du système, et la connectivité et l'entretien de l'unité de contrôle (3).

20. Système de contrôle selon l'une des revendications précédentes, **caractérisé en ce que** le dispositif de véhicule est un système de contrôle domestique du dispositif (1)

21. Système de contrôle selon l'une des revendications précédentes, **caractérisé en ce que** le dispositif est un sous-système indépendant (1).

22. Système de contrôle selon l'une des revendications précédentes, **caractérisé en ce que** le dispositif est un élément de sous-système indépendant (1).

23. Méthode de contrôle d'au moins un dispositif (1) de véhicule (V) comprenant une unité de contrôle (3) connectée au dit dispositif (1) de véhicule (V) par des premiers moyens de connexion (4), laquelle unité de contrôle (3) est également connectée à au moins un dispositif client (B1) par des deuxièmes moyens de connexion (5), **caractérisé en ce qu'**il comprend les étapes suivantes:
(A) un utilisateur s'identifie lui-même/elle-même à travers le dispositif de client (B1) moyennant les données d'identification;
(B) le serveur de protocole de transfert (B2) envoie (AF) des données d'identification d'utilisateur (2) aux moyens de gestion de session (B6) afin d'initier une session et sauvegarder (AG, AH) la validation de l'utilisateur (2) dans les moyens de journalisation du système (B5);
(C) le statut actuel du dispositif (1) de véhicule (V) est réclamé (AL) aux médias de stockage de données (B8), lequel statut actuel est envoyé (AM, AN, AO) au serveur de protocole de transfert (B2), qui l'affiche (AP) à l'utilisateur (2), à travers le dispositif client (B1), en utilisant une interface correspondante humain-machine (B1);
(D) l'utilisateur (2) génère un événement de manipulation du dispositif (1) de véhicule (V), en interaction avec l'interface humain-machine (11) affichée sur le dispositif client (B1), lequel événement est envoyé (BA) au serveur de protocole de transfert (B2);
(E) ledit serveur (B2) envoie (BB) l'événement de manipulation du dispositif (1) généré par l'utilisateur (2), au moyen de gestion de session (B6) qui contrôle (BC, BD) la génération de l'événement devant être sauvegardé dans les moyens de journalisation du système (85);
(F) l'événement est envoyé (BF) au dispositif (1) de véhicule (1) à travers des moyens d'abstraction (B10, B11) dudit dispositif, afin d'effectuer la manipulation de ce dernier; les moyens d'abstraction virtualisant le dispositif, grâce auxquels le dispositif peut être contrôlé sans devoir y stocker son information physique ni le protocole de contrôle de bas niveau.
(G) l'information du statut actuel du dispositif (1) est actualisée (BH) dans les médias de stockage de données (B8); et
(H) la réponse du dispositif de véhicule (1) est envoyée (B1) aux moyens de gestion de session (B6), qui, à leur tour, enregistrent (BJ, BK) la réponse dans les moyens de journalisation du système (B5), lesquels moyens de gestion de session (B6) envoient (BL) la réponse du dispositif (1) au serveur de protocole de transfert (B2), qui l'affiche (BM) à l'utilisateur (2), à travers le dispositif du client (B1) en utilisant l'interface humain-machine (11).

24. Méthode selon la revendication 23, **caractérisé en ce que** l'étape (A) comprend les sous-étapes suivantes:
(A.1) un utilisateur (2) envoie (AA) une demande de service depuis le dispositif de client (B1) à un serveur de protocole de transfert (B2);
(A.2) le serveur de protocole de transfert (B2) affiche (AB) une page d'identification d'utilisateur (2) dans le dispositif de client (B1);
(A.3) l'utilisateur (2) envoie (AC, AD) les données d'identification, à travers le serveur de protocole de transfert (B2), à des moyens d'administration de l'utilisateur (B3) pour leur validation, lesquels moyens d'administration de l'utilisateur (B3) envoient (AE) le résultat de ladite validation au serveur de protocole de transfert (B2).

25. Méthode conformément à l'une des revendications 23 ou 24, **caractérisée en ce qu'**elle comprend également les étapes suivantes comprises entre les étapes B et C:
(I) les moyens de gestion de session (B6) réclament (Al) les autorisations assignées audit utilisateur validé (2) aux moyens de l'utilisateur (B4) qui sont envoyées (AJ) aux moyens de gestion de session (B6); et
(J) les moyens de gestion de session (B6) interrogent (AK) les médias de stockage de services (B7) pour fournir les services disponibles à l'utilisateur (2).

26. Méthode selon l'une des revendications 23 à 25, **caractérisé en ce qu'**elle comprend également une étape comprise entre les étapes E et F, où l'événement de manipulation du dispositif (1) de véhicule (V) est envoyé (BE) aux moyens d'actualisation (B9).

27. Méthode selon l'une des revendications 23 à 26, **caractérisée en ce qu'**elle comprend également une étape comprise entre les phases F et G, où le dispositif (1) de véhicule (V) réagit aux (BG) moyens d'actualisation (B9), à travers les moyens d'abstraction (B10, B11).

28. Méthode selon l'une des revendications 24 à 27, **caractérisée en ce que** le contrôle revient à la sous-étape (A.2) lorsque la validation d'utilisateur (2) dans les moyens d'administration de l'utilisateur (B3) pendant une sous-étape (A.3) est incorrecte.
